**Europäisches Patentamt**

**European Patent Office**

**Office européen des brevets**

(19)

(11) Veröffentlichungsnummer: **0 103 108**
**A2**

(12) ## EUROPÄISCHE PATENTANMELDUNG

(21) Anmeldenummer: **83107005.7**

(22) Anmeldetag: **16.07.83**

(51) Int. Cl.³: **E 04 B 1/60**

(30) Priorität: **15.09.82 DE 3234188**

(43) Veröffentlichungstag der Anmeldung: **21.03.84**
**Patentblatt 84/12**

(84) Benannte Vertragsstaaten: **AT BE CH FR GB IT LI NL**

(71) Anmelder: **artur fischer forschung, Weinhalde 14 - 18,
D-7244 Waldachtal 3 (Tumlingen) (DE)**

(72) Erfinder: **Fischer, Artur, Dr. h. c., Weinhalde 34,
D-7244 Tumlingen/Waldachtal 3 (DE)**
Erfinder: **Walther, Horst, Schröderstrasse 16,
D-6900 Heidelberg (DE)**

(54) **Verfahren zur Befestigung von Hohlkammerplatten.**

(57) Die Erfindung bezieht sich auf ein Verfahren zur Befestigung einer aus Ober- und Untergurtplatten sowie Kammern bildenden Stegen bestehenden Hohlkammerplatte an eine Querstreben aufweisende Unterkonstruktion. Die Befestigung der Hohlkammerplatte an die Querstreben erfolgt mittels Befestigungselemente, die aus einem durch ein oder mehrere Haken in den Kammern der Hohlkammerplatte befestigbaren Anker und einer mit dem Anschlußteil des Ankers verbindbaren U-förmigen und über die Querstrebe stülpbaren Klammer besteht. Zur Ausrichtung bei der Montage einerseits und zum Auffangen des Plattengewichts bei schräg- bzw. senkrechtstehenden Wänden anderseits ist eine die Dehnungsmöglichkeit der Platte nicht behindernde Fixierung notwendig. Um dies zu erreichen wird die Klammer eines vorzugsweise im Mittelbereich der Platte angeordneten Befestigungselementes auf der Querstrebe zur Herstellung eines nach allen Richtungen gesicherten Festpunktes arretiert. Ferner wird beidseitig und im Abstand zu diesem Festpunkt jeweils eine weitere Klammer auf derselben Querstrebe sich abstützend montiert.

EP 1465

## Verfahren zur Befestigung von Hohlkammerplatten

Die Erfindung betrifft ein Verfahren zur Befestigung einer aus Ober- und Untergurtplatten sowie Kammern bildenden Stegen bestehenden Hohlkammerplatte an eine Querstreben aufweisende Unterkonstruktion, wobei die Befestigung der Hohlkammerplatte an die Querstreben mittels Befestigungselemente erfolgt, die aus einem durch ein oder mehrere Haken in den Kammern der Hohlkammerplatte befestigbaren Anker und einer mit dem Anschlußteil des Ankers verbindbaren U-förmigen und über die Querstrebe stülpbaren Klammer bestehen.

Aus der DE-OS 30 39 917 ist ein aus einem Anker und einer U-förmigen Klammer bestehendes Befestigungselement bekannt, mit dem Hohlkammerplatten an eine Querstreben aufweisende Unterkonstruktion derart befestigbar sind, daß die durch Temperaturdifferenzen bedingten Ausdehnungen der Platte ohne Beeinträchtigung der Platten möglich sind. Zur Ausrichtung bei der Montage einerseits und zum Auffangen des Plattengewichts bei schräg- bzw. senkrechtstehenden Wänden andererseits ist jedoch eine die Dehnungsmöglichkeit der Platte nicht behindernde Fixierung notwendig.

Der Erfindung liegt die Aufgabe zugrunde, eine solche Möglichkeit zu schaffen, wobei das Verfahren montagefreundlich und wie schon bei den Befestigungselementen ohne Perforierung der die Außenhaut bildenden Obergurtplatte der Hohlkammerplatten durchführbar sein soll.

Erfindungsgemäß wird dies dadurch erreicht, daß die Klammer eines vorzugsweise im Mittelbereich der Platte angeordneten Befestigungselementes auf der Querstrebe zur Herstellung eines nach allen Richtungen gesicherten Festpunktes arretiert wird, und daß beidseitig und im Abstand zu diesem Festpunkt jeweils eine weitere Klammer auf derselben Querstrebe sich abstützend montiert wird.

...

EP 1465

Bei aus Polykarbonat bestehenden Hohlkammerplatten ist die Ausdehnung bei der üblicherweise für intensive Sonneneinstrahlung und Kältegrade im Winter anzusetzenden Temperaturdifferenz ca. 6 mm pro ein Meter Plattenlänge. Bei den im Gewächshausbau eingesetzten Platten von ca. 6 m Länge und 2 m Breite ergibt sich eine Ausdehnung in der Länge von 36 mm und in der Breite von 12 mm. Unterstellt man, daß bei der Montage etwa die mittlere Temperatur der zu berücksichtigenden Temperaturdifferenz vorliegt, muß die Befestigung einen Spielraum für die Dehnung berücksichtigen, der etwa der Hälfte der Gesamtdehnung entspricht. Durch die Anordnung des Festpunktes im Mittelbereich der Platte wiederum ergibt sich eine weitere Halbierung des Dehnungsspielraumes, so daß in Längsrichtung der Platte an ihren Enden noch ein maximales Spiel von 9 mm zu berücksichtigen ist. Wird dieses Spiel bei den übrigen Klammern vorgegeben, so kann sich die Platte vom Festpunkt aus nunmehr nach allen Richtungen hin ausdehnen, ohne daß eine Verspannung der Platte und damit eine Beschädigung eintritt.

Um den mittleren Festpunkt als Drehachse könnte sich jedoch die Platte zumindest um das durch die übrigen Befestigungselemente vorgegebene Spiel drehen. Dies wird durch die beidseitig und im Abstand zu diesem Festpunkt angeordneten Klammern verhindert, die auf derselben Querstrebe mit dem eine Längsdehnung der Platte auf dieser Ebene verhinderndem Festpunkt aufliegend montiert sind. Durch die Auflage auf der Querstrebe ist ein Verdrehen der Platte nicht mehr möglich. Ferner wird die vom Festpunkt ausgehende Ausdehnung der Platte in die Breite nicht behindert. Zusätzlich wird durch die beiden Abstützungen das Gewicht der Platte mitgetragen.

In einer weiteren Ausgestaltung der Erfindung können die Klammern aller Befestigungselemente einer Platte auf den Querstreben mit Spiel montiert werden, und das Spiel bei den den Festpunkt sowie die benachbarten Auflager bildenden Klammern durch ein Abstandsteil ausgefüllt sein.

...

EP 1465

Die Montage der Befestigungselemente wird so ausgeführt, daß die Querstreben zum Grund der U-förmigen Klammern das maximal notwendige Spiel aufweisen. Bei der den Festpunkt und die beiden Auflager aufweisenden Querstrebe wird dieses Spiel durch Einschieben eines Abstandteiles ausgefüllt. Damit stützen sich diese Klammern über das Abstandsteil unmittelbar an der Querstrebe ab. Durch diese Maßnahme wird die Montage vereinfacht und Montagefehler durch unterschiedliches Setzen der Klammern vermieden.

Die Arretierung der den Festpunkt bildenden Klammer auf der Querstrebe kann bspw. durch Verstiften oder Verschrauben der Klammer mit der Querstrebe erfolgen. Eine besonders vorteilhafte, ohne Hilfswerkzeuge auskommende Arretierung kann in Ergänzung der Erfindung durch eine Vorrichtung erreicht werden, die als Spannbügel ausgebildet ist, der eine die Querstrebe erfassende Öse und eine sich an der Außenfläche des Steges der Klammer abstützende Spannlasche aufweist.

Anhand des in der Zeichnung dargestellten Ausführungsbeispieles ist das erfindungsgemäße Verfahren nähers erläutert. Es zeigen:

Figur 1    eine an eine Unterkonstruktion mit Querstreben befestigte Hohlkammerplatte

Figur 2    ein als Festpunkt arretiertes, aus Klammer und Anker bestehendes Befestigungselement in Seitenansicht.

Die bspw. aus Polykarbonat hergestellte Hohlkammerplatte 1 besteht aus einer Ober- und Untergurtplatte, die über längsverlaufende Stege 2 miteinander verbunden sind. Mit derartigen Platten sind Eindeckungen von bspw. Gewächshäusern, Schutzkabinen und ähnlichem herstellbar. Mit Knotenpunktelemente 3 sind die Querstreben 4 an die senkrecht stehenden Bogenstäbe 5 befestigt. Es sind jedoch auch andere Unterkonstruktionen denkbar. Wesentlich ist lediglich, daß die Querstreben 4 im Durchmesser

...

EP 1465

der U-förmigen Aufnahme 6 der Klammer 7 angepaßt sind, so daß sowohl in Längs- als auch in Querrichtung der Platte 1 eine Verschiebung der mit der Platte verbundenen Klammer 7 auf der Querstrebe 4 möglich ist.

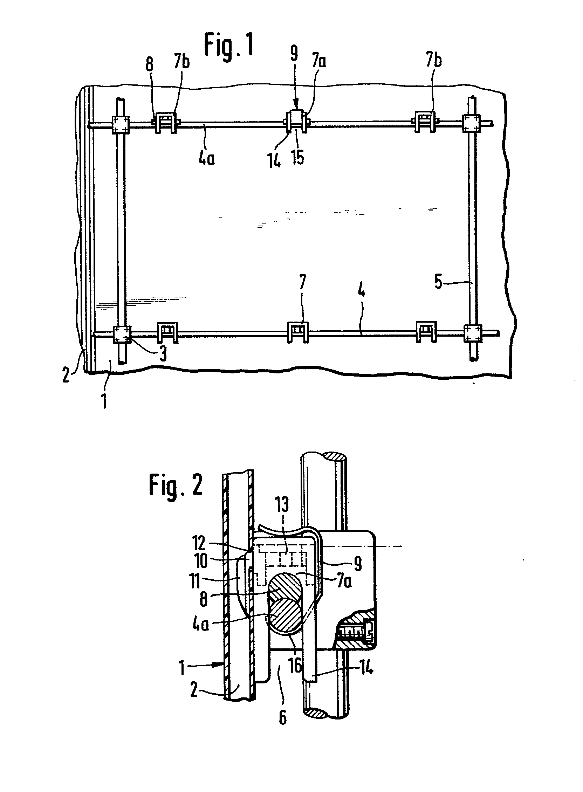

In Figur 1 ist ein Befestigungsfeld dargestellt, wobei die in der Zeichnung obere Querstrebe 4 a in der Praxis etwa in der Mitte der Längsrichtung der Platte 1 angeordnet sein soll. Auf dieser Querstrebe 4 a ist die mittlere Klammer 7 a als Festpunkt und die beidseitig im Abstand angeordneten Klammern 7 b als Auflager ausgebildet. Zu diesem Zweck ist das bewußt vorgegebene Spiel zwischen den Querstreben 4 und dem Grund der U-förmigen Klammern 7 bei der mittleren Querstrebe (in der Zeichnung die obere Querstrebe 4 a) mit einem Abstandsteil 8 ausgefüllt. Die zusätzliche Verklemmung der mittleren Klammer 7 a mit einem Spannbügel 9 arretiert die Platte 1 an dieser Stelle derart, daß eine Verschiebung ausgeschlossen ist. Damit verlaufen die Ausdehnungsverschiebungen der Platte von diesem Punkt aus nach allen Richtungen. Die beiden äußeren auf der gleichen Querstrebe 4 a liegenden Auflager lassen die Querverschiebung zu, stabilisieren die Platte jedoch gegen ein Verdrehen um den Festpunkt. Gleichzeitig wird durch diese drei Klammern das Gewicht der Platte 1 aufgenommen. Durch das vorgegebene Spiel bei allen übrigen Klammern 7 kann sich nunmehr die Platte ausdehnen, ohne daß Verspannungen zwischen den Klammern eintreten, die zu Beschädigungen der Platte bzw. der Befestigungselemente oder zu Auswölbungen der Platte führen könnten.

Die aus dem Anker 10 und der U-förmigen Klammer 7 bestehenden Befestigungselemente nehmen die auf die Hohlkammerplatte 1 wirkenden Druck- und Sogkräfte auf. Zum Verankern des Ankers 10 in der Platte 1 werden in die Untergurtplatte entsprechend der Anzahl der Haken 11 Löcher 12 gebohrt und danach die Haken 11 in diese Löcher eingehängt. In das rechtwinklig von der Platte 1 abstehende Anschlußteil 13 des Ankers 10 wird die U-förmige Klammer 7 a in der Weise eingeklipst, daß die Schenkel 14 der Klammer 7 a über die Querstrebe 4 a gestülpt sind. Bei den den Festpunkt und die beiden Auflager bildenden Klammern 7 a, 7 b wird das bei der Montage eingestellte Spiel zwischen der Querstrebe 4 a und dem

...

- 5 -

EP 1465

Grund der U-förmigen Klammer durch das Abstandsteil 8 ausgefüllt, so daß sich die Klammer über das Abstandsteil unmittelbar an der Querstrebe abstützt. Bei der mittleren, den Festpunkt bildenden Klammer 7 a wird zusätzlich der Spannbügel 9 aufgesetzt, der Querstrebe und das Befestigungselement so stark verspannt, daß aufgrund der erhöhten Reibung eine die Verschiebung in diesem Punkt ausschließende Arretierung erreicht wird. Der Spannbügel 9 paßt in die vom freien Stirnende der Schenkel 14 ausgehende Aussparung 15, so daß die Öse 16 des Spannbügels 9 in die Querstrebe 4 a eingehängt werden kann.

0103108

artur fischer forschung
.7244 Waldachtal 3/Tumlingen

10. September 1982
Ju/Woe

- 1 -

EP 1465

Patentansprüche

1.  Verfahren zur Befestigung einer aus Ober- und Untergurtplatten
    sowie Kammern bildenden Stegen bestehenden Hohlkammerplatte an
    eine Querstreben aufweisende Unterkonstruktion, wobei die Befestigung der Hohlkammerplatte an die Querstreben mittels Befestigungselemente erfolgt, die aus einem durch ein oder mehrere Haken in den Kammern der Hohlkammerplatte befestigbaren Anker und
    einer mit dem Anschlußteil des Ankers verbindbaren U-förmigen
    und über die Querstrebe stülpbaren Klammer bestehen, dadurch gekennzeichnet, daß die Klammer eines vorzugsweise im Mittelbereich
    der Platte angeordneten Befestigungselementes auf der Querstrebe
    zur Herstellung eines nach allen Richtungen gesicherten Festpunktes
    arretiert wird, und daß beidseitig und im Abstand zu diesem Festpunkt jeweils eine weitere Klammer auf derselben Querstrebe sich
    abstützend montiert wird.

2.  Verfahren nach Anspruch 1, dadurch gekennzeichnet, daß die Klammern aller Befestigungselemente einer Platte auf den Querstreben
    mit Spiel montiert werden, und daß das Spiel bei den den Fest-

...

0103108

EP 1465

punkt sowie die benachbarten Auflager bildenden Klammern durch ein Abstandsteil ausgefüllt wird.

3. Vorrichtung zur Arretierung der den Festpunkt bildenden U-förmigen Klammer, deren Schenkel von ihrem freien Ende ausgehend in Richtung des Steges ausgespart sind, insbesondere nach Anspruch 1, dadurch gekennzeichnet, daß die Vorrichtung als Spannbügel ausgebildet ist, der eine die Querstrebe erfassende Öse und eine sich an der Außenfläche des Steges der Klammer abstützende Spannlasche aufweist.

## Fig.1

## Fig.2